# EUROPEAN PATENT APPLICATION

(11) **EP 4 574 500 A1**
(43) Date of publication of application: **25.06.2025**
(21) Application number: 23885586.0
(22) Date of filing: 24.10.2023
(51) Int. Cl.: B60K 11/04, F25B 1/00, F25B 41/40, F25B 41/42, B60K 1/04

(54) **COOLING MODULE**

(30) Priority: 31.10.2022 JP 2022174328
(71) Applicant: AISIN CORPORATION, Kariya-shi, Aichi 448-8650 (JP)
(72) Inventor: SASAKI, Yu, Kariya-shi, Aichi 448-8650 (JP)
(74) Representative: Kramer Barske Schmidtchen Patentanwälte PartG mbB
(86) International application number: PCT/JP2023/038317
(87) International publication number: WO 2024/095826

(57) **Abstract**

A cooling module includes a manifold in which a flow path configured to allow a fluid to flow therethrough is formed. The manifold includes, inside the manifold, a branch flow path branching from the flow path, a merging flow path merging with the flow path downstream of the branch flow path in a flow direction of the fluid, and a receiver communicating with the branch flow path and the merging flow path and configured to store the fluid flowing through the branch flow path and allow the stored fluid to flow from the merging flow path to the flow path.

## Description

### Technical Field

This disclosure relates to a cooling module.

### Background Art

PTL 1 discloses a reservoir that facilitates at least one of storage and flow of a liquid medium in a pump, a chiller, a heater, or the like by joining a first section and a second section. PTL 1 discloses that the reservoir includes an integrated channel that provides a path through which a liquid medium flows to a pump, a valve, a heater, or the like, and the liquid medium is transported between a plurality of components via the integrated channel.

### Citation List

### Patent Literature

PTL 1: JP2019-520261A

### Summary of Invention

### Technical Problem

For example, in a refrigerant circuit of a heat pump system, when a receiver tank for storing a liquid refrigerant is provided in preparation for a rapid change in output of a cooling function (for example, cooling), it is assumed that the reservoir disclosed in PTL 1 is used as the receiver tank. However, although the reservoir described in PTL 1 is made smaller in size by the integrated channel, the receiver tank is separately provided, and occupies a limited space in a vehicle.

In view of the above problem, an object of this disclosure is to provide a compact cooling module.

### Solution to Problem

A cooling module according to this disclosure includes a manifold in which a flow path configured to allow a fluid to flow therethrough is formed. The manifold includes, inside the manifold, a branch flow path branching from the flow path, a merging flow path merging with the flow path downstream of the branch flow path in a flow direction of the fluid, and a storage unit communicating with the branch flow path and the merging flow path and configured to store the fluid flowing through the branch flow path and allow the stored fluid to flow from the merging flow path to the flow path.

According to this configuration, since the branch flow path, the merging flow path, and the storage unit are provided inside the manifold, the cooling module can be made compact. Thus, a compact cooling module is obtained.

### Brief Description of Drawings

[Fig. 1] Fig. 1 is a diagram schematically illustrating a circuit configuration of a cooling system according to an embodiment.
[Fig. 2] Fig. 2 is a view illustrating a part of an external appearance of a manifold according to the embodiment.
[Fig. 3] Fig. 3 is a perspective view illustrating a part of the inside of the manifold according to the embodiment.
[Fig. 4] Fig. 4 is a perspective view illustrating a part of the inside of a manifold according to another embodiment.

### Description of Embodiments

Hereinafter, a cooling module according to embodiments disclosed here will be described with reference to the drawings. This disclosure is not limited to the following embodiments, and various modifications can be made without departing from the gist of this disclosure.

### [Cooling System]

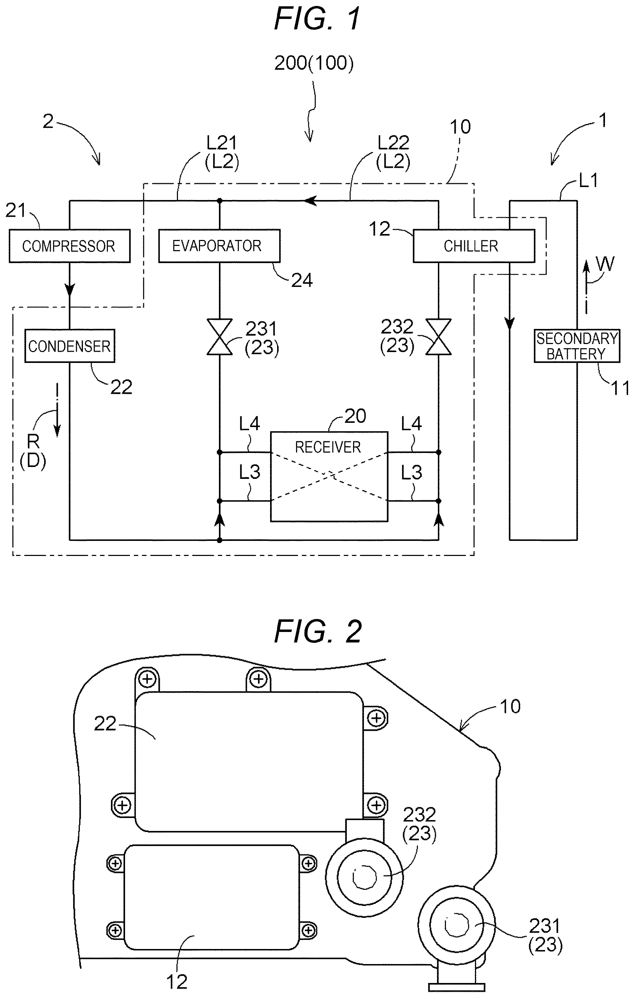

Fig. 1 is a diagram schematically illustrating a circuit configuration of a cooling system 200 including a cooling module 100. In the present embodiment, the cooling module 100 is integrally disposed with a drive unit (not illustrated) including a motor (not illustrated). The cooling module 100 may be provided separately from the drive unit (not illustrated). The motor (not illustrated) is disposed in, for example, a motor room of an electric vehicle or the like.

As illustrated in Fig. 1, the cooling system 200 includes a cooling fluid circuit 1 through which a cooling fluid W circulates, and a refrigerant circuit 2 through which a refrigerant R (an example of a fluid) circulates. The cooling fluid W is a cooling fluid such as a long-life coolant (LLC), paraffin-based insulating oil, or a refrigerant such as hydrofluorocarbon (HFC) or hydrofluoroolefin (HFO). The refrigerant R is a refrigerant such as hydrofluorocarbon (HFC) or hydrofluoroolefin (HFO).

### [Cooling Fluid Circuit]

The cooling fluid circuit 1 is a circuit for adjusting (cooling) a temperature of a secondary battery 11. The cooling fluid circuit 1 includes a cooling fluid flow path L1 through which the cooling fluid W flows, the secondary battery 11, and a chiller 12 that performs heat exchange between the cooling fluid W and the refrigerant R. The secondary battery 11 and the chiller 12 are connected via the cooling fluid flow path L1. The cooling fluid W is heated by heat generated from the secondary battery 11 and then flows into the chiller 12. After being cooled by heat exchange with the refrigerant R in the chiller 12, the cooling fluid W flows into the secondary battery 11 and is heated again by the heat generated from the secondary battery 11.

### [Refrigerant Circuit]

The refrigerant circuit 2 is a circuit for adjusting a temperature in a vehicle cabin. The refrigerant circuit 2 includes a refrigerant flow path L2 (an example of a flow path) through which the refrigerant R flows. Hereinafter, a direction in which the refrigerant R flows is referred to as a flow direction D, an upstream side of the flow direction D is simply referred to as "upstream", and a downstream side of the flow direction D is simply referred to as "downstream".

The refrigerant circuit 2 includes a compressor 21 that compresses the refrigerant R, a condenser 22 that condenses the refrigerant R compressed by the compressor 21, an expansion valve 23 that expands the condensed refrigerant R, an evaporator 24 that evaporates the refrigerant R expanded by the expansion valve 23, and the chiller 12 that performs heat exchange between the refrigerant R expanded by the expansion valve 23 and the cooling fluid W. In the present embodiment, the expansion valve 23 includes a first expansion valve 231 connected to the evaporator 24 and a second expansion valve 232 connected to the chiller 12. The refrigerant flow path L2 includes a first refrigerant flow path L21 (an example of a first flow path) and a second refrigerant flow path L22 (an example of a second flow path) that branches from the first refrigerant flow path L21.

The compressor 21, the condenser 22, a receiver 20, the first expansion valve 231, and the evaporator 24 are connected to the first refrigerant flow path L21, and the refrigerant R expanded by the first expansion valve 231 flows into the evaporator 24.

The second expansion valve 232 and the chiller 12 are connected to the second refrigerant flow path L22, and the refrigerant R expanded by the second expansion valve 232 flows into the chiller 12. The second refrigerant flow path L22 is connected to the first refrigerant flow path L21 between the evaporator 24 and the compressor 21 downstream of the chiller 12, and the refrigerant R after heat exchange performed by the chiller 12 merges with the refrigerant R flowing through the first refrigerant flow path L21 between the evaporator 24 and the compressor 21. That is, the first expansion valve 231 and the evaporator 24, and the second expansion valve 232 and the chiller 12 form a parallel circuit.

The refrigerant R is compressed by the compressor 21 described with reference to Fig. 1 to be a high-temperature compressed gas, and then the high-temperature compressed gas flows into the condenser 22 to be condensed and liquefied. The liquefied refrigerant R is expanded by the first expansion valve 231 or the second expansion valve 232 so as to be in a low-temperature and low-pressure atomized state. The refrigerant R used to adjust the temperature in the vehicle cabin in the atomized refrigerant R, that is, the refrigerant R expanded by the first expansion valve 231, flows into the evaporator 24. In the evaporator 24, the refrigerant R removes heat from air introduced from external air, evaporates, and vaporizes. Accordingly, the cooled air is supplied into the vehicle cabin. On the other hand, the refrigerant R not used to adjust the temperature in the vehicle cabin in the atomized refrigerant R, that is, the refrigerant R expanded by the second expansion valve 232 flows into the chiller 12. In the chiller 12, the refrigerant R removes heat from the cooling fluid W that circulates through the cooling fluid circuit 1 described with reference to Fig. 1, evaporates, and vaporizes. In the evaporator 24 and the chiller 12, the vaporized refrigerant R flows into the compressor 21.

As illustrated in Fig. 2, auxiliary devices such as the chiller 12, the condenser 22, the first expansion valve 231, the second expansion valve 232, and the evaporator 24 (not illustrated) are attached to a manifold 10 (two-dot chain lines illustrated in Fig. 1). Fig. 2 is a view illustrating a part of an external appearance of the manifold 10. The manifold 10 is manufactured by, for example, die casting in which a molten metal containing aluminum or the like is press-fitted into a metal mold.

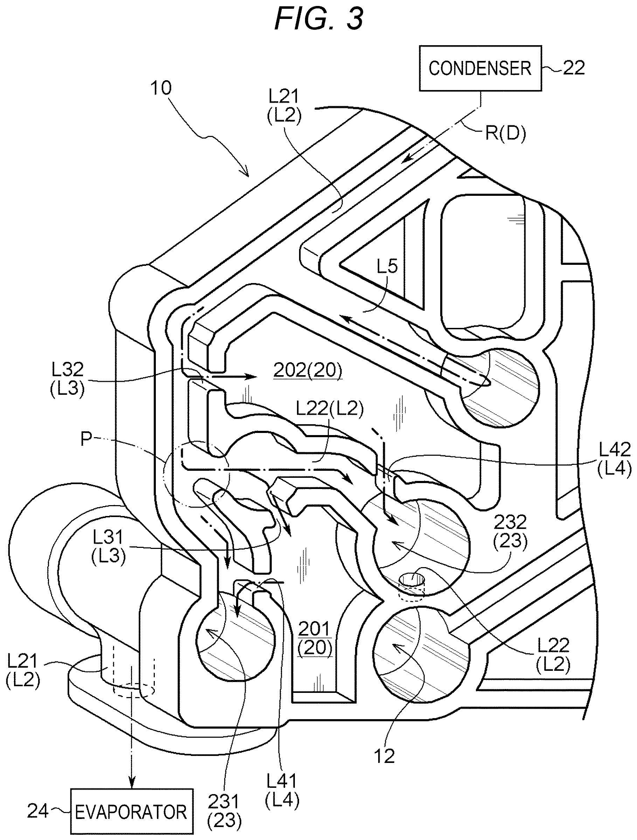

Returning to Fig. 1, the refrigerant circuit 2 further includes a branch flow path L3 that branches from the refrigerant flow path L2, a merging flow path L4 that merges with the refrigerant flow path L2 downstream of the branch flow path L3, and the receiver 20 (an example of a storage unit) connected to (communicating with) the branch flow path L3 and the merging flow path L4. In the present embodiment, two branch flow paths L3 and two merging flow paths L4 are provided. Hereinafter, one of the branch flow paths L3 is referred to as a "first branch flow path L31" and the other is referred to as a "second branch flow path L32", and one of the merging flow paths L4 is referred to as a "first merging flow path L41" and the other is referred to as a "second merging flow path L42" (see Fig. 3).

The branch flow path L3 branches from the refrigerant flow path L2 between the condenser 22 and the expansion valve 23, and the merging flow path L4 merges with the refrigerant flow path L2 downstream of the branch flow paths L3 (between the condenser 22 and the expansion valve 23). That is, the branch flow path L3 and the merging flow path L4 are connected to the refrigerant flow path L2 downstream of the condenser 22, and are connected to the refrigerant flow path L2 upstream of the expansion valve 23.

The receiver 20 stores the refrigerant R flowing through the branch flow path L3, that is, the refrigerant R condensed into a liquid state by the condenser 22. The storage of the refrigerant R in the receiver 20 and the supply of the refrigerant R from the receiver 20 are controlled by adjusting a discharge amount (output) of the compressor 21 and an opening degree of the expansion valve 23. The compressor 21 and the expansion valve 23 are controlled by a control device (not illustrated) including a processor such as a central processing unit (CPU). When the amount (hereinafter referred to as a "supply amount") of the refrigerant R supplied from the compressor 21 to the expansion valve 23 via the condenser 22 and the amount (hereinafter referred to as a "required amount") of the refrigerant R required in the expansion valve 23 are equal (also including substantially equal), the amount (hereinafter referred to as a "storage amount") of the refrigerant R stored in the receiver 20 is maintained, and the storage amount does not increase.

The receiver 20, the branch flow paths L3, the merging flow paths L4, and a part of the refrigerant flow path L2 are formed inside the manifold 10 (see Fig. 3).

### [Inside Manifold]

Fig. 3 is a perspective view illustrating a part of the inside of the manifold 10. As illustrated in Fig. 3, the first refrigerant flow path L21 is formed inside the manifold 10 along an outer edge of the manifold 10. The condenser 22 is disposed on an upstream side of the first refrigerant flow path L21 formed inside the manifold 10, and the evaporator 24 is disposed on a downstream side of the first refrigerant flow path L21. The first expansion valve 231 is disposed upstream of the evaporator 24. An orientation of the manifold 10 during use is not particularly limited, and hereinafter, a side on which the evaporator 24 is disposed with respect to the first expansion valve 231 is referred to as a "lower side", and a side opposite to the lower side is referred to as an "upper side".

The second refrigerant flow path L22 branches from the first refrigerant flow path L21 at a branch position P between the condenser 22 and the first expansion valve 231, and extends in a direction intersecting a direction in which the first refrigerant flow path L21 extends. The chiller 12 is disposed on a downstream side of the second refrigerant flow path L22, and the second expansion valve 232 is disposed upstream of the chiller 12.

An external connection flow path L5 connected to an external flow path (not illustrated) and the first refrigerant flow path L21 is formed inside the manifold 10. In Fig. 2, the external connection flow path L5 is omitted.

The external connection flow path L5 allows the refrigerant R from the external flow path (not illustrated) to flow therein and merge with the refrigerant R in the first refrigerant flow path L21. The external flow path is a refrigerant flow path formed outside the manifold 10, and is a flow path different from the refrigerant flow path L2. An auxiliary device such as a condenser (not illustrated and different from the condenser 22) is connected to the external flow path.

The receiver 20 is disposed in the vicinity of the expansion valve 23 inside the manifold 10 so as to avoid the refrigerant flow path L2, the branch flow path L3, the merging flow path L4, the first expansion valve 231, and the second expansion valve 232. Hereinafter, inside the manifold 10, a space in which the refrigerant flow path L2, the branch flow path L3, the merging flow path L4, the first expansion valve 231, and the second expansion valve 232 are not provided is referred to as a "dead space". That is, the receiver 20 is disposed in the dead space of the manifold 10 in the vicinity of the expansion valve 23. In the present embodiment, the dead space is a region on a back side (inner side) of a region in which the auxiliary devices such as the condenser 22 and the chiller 12 provided on an outer side of the manifold 10 described with reference to Fig. 2 are disposed inside the manifold 10. That is, the dead space is a region on an inner side of a projection image of the auxiliary devices such as the condenser 22 and the chiller 12 when viewed in a direction orthogonal to a main surface of the manifold 10. The main surface of the manifold 10 is a plane containing a direction in which a flow path L extends. In the present embodiment, the dead space is disposed between the first refrigerant flow path L21 and the external connection flow path L5.

As illustrated in Fig. 3, two receivers 20 are provided inside the manifold 10. Hereinafter, of the two receivers 20, the receiver 20 disposed between the first expansion valve 231 and the second expansion valve 232 is referred to as a "first receiver 201", and the receiver 20 disposed on a side (upper side) that is farther from the first expansion valve 231 than is the first receiver 201 is referred to as a "second receiver 202".

The first receiver 201 is connected to the first branch flow path L31 and the first merging flow path L41.

The first branch flow path L31 allows the first receiver 201 to communicate with the refrigerant flow path L2 (the second refrigerant flow path L22). Specifically, the first branch flow path L31 is connected to an end portion (in the vicinity of the branch position P) on the upstream side of the second refrigerant flow path L22 in the flow direction D, and is connected to the first refrigerant flow path L21 via the second refrigerant flow path L22.

The first merging flow path L41 allows the first receiver 201 to communicate with the first expansion valve 231. Specifically, the first merging flow path L41 is connected to the first refrigerant flow path L21 upstream of the first expansion valve 231 in the vicinity of the first expansion valve 231, and communicates with the first expansion valve 231 via the first refrigerant flow path L21. The first merging flow path L41 is connected to the evaporator 24 via the first expansion valve 231 and the first refrigerant flow path L21 downstream of the first expansion valve 231. That is, the first expansion valve 231 communicates with the first receiver 201 via the first merging flow path L41 connected to the first refrigerant flow path L21 upstream of the first expansion valve 231. In addition, the first expansion valve 231 is connected to the evaporator 24 via the first refrigerant flow path L21 downstream of the first expansion valve 231.

The second receiver 202 is connected to the second branch flow path L32 and the second merging flow path L42.

The second branch flow path L32 allows the second receiver 202 to communicate with the refrigerant flow path L2 (the first refrigerant flow path L21). The second branch flow path L32 is connected to the first refrigerant flow path L21 upstream of the branch position P.

The second merging flow path L42 allows the second receiver 202 to communicate with the second expansion valve 232. Specifically, the second merging flow path L42 is connected to the second refrigerant flow path L22 upstream of the second expansion valve 232 in the vicinity of the second expansion valve 232. That is, the second receiver 202 communicates with the second expansion valve 232 via the second refrigerant flow path L22. The second merging flow path L42 is connected to the chiller 12 via the second expansion valve 232 and the second refrigerant flow path L22 downstream of the second expansion valve 232. That is, the second expansion valve 232 communicates with the second receiver 202 via the second merging flow path L42 connected to the second refrigerant flow path L22 upstream of the second expansion valve 232. In addition, the second expansion valve 232 is connected to the chiller 12 via the second refrigerant flow path L22 downstream of the second expansion valve 232.

### [Flowing of Refrigerant inside Manifold]

Next, flowing of the refrigerant R inside the manifold 10 will be described with reference to Figs. 1 and 3.

First, a case will be described in which the compressor 21 and the expansion valve 23 are controlled such that the supply amount of the refrigerant R is equal to the required amount of the refrigerant R. Hereinafter, the case in which the compressor 21 and the expansion valve 23 are controlled such that the supply amount of the refrigerant R is equal to the required amount of the refrigerant R is referred to as an "equal operation mode".

In the equal operation mode, the refrigerant R from the condenser 22 entirely flows into the expansion valve 23 without being newly stored in the receiver 20. Specifically, the refrigerant R from the condenser 22 flows through the first refrigerant flow path L21 and flows into the first expansion valve 231, and flows into the second expansion valve 232 via the first refrigerant flow path L21 and the second refrigerant flow path L22. Hereinafter, the opening degree of the expansion valve 23, when the supply amount of the refrigerant R is equal to the required amount of the refrigerant R, is referred to as a "reference opening degree", and the discharge amount of the compressor 21 is referred to as a "reference discharge amount".

In the equal operation mode, for example, when the opening degree of the expansion valve 23 (at least one of the first expansion valve 231 and the second expansion valve 232) is larger than the reference opening degree in a state in which the refrigerant R is not stored in the receiver 20, the compressor 21 is controlled such that the discharge amount (output) thereof is larger than the reference discharge amount according to a change in the opening degree of the expansion valve 23. However, after being compressed by the compressor 21, the refrigerant R is condensed by the condenser 22 and then supplied to the expansion valve 23. Therefore, it takes time (hereinafter, referred to as a "first required time") to reach the expansion valve 23, and the refrigerant R is temporarily insufficient in the expansion valve 23.

Therefore, in the present embodiment, the compressor 21 and the expansion valve 23 are controlled such that the refrigerant R is stored in the receiver 20 in advance. For example, the compressor 21 is controlled such that the discharge amount is larger than the reference discharge amount, and the expansion valve 23 is controlled such that the opening degree of at least one of the first expansion valve 231 and the second expansion valve 232 is maintained at the reference opening degree (or smaller than the reference opening degree). Alternatively, the compressor 21 is controlled such that the discharge amount is maintained at the reference discharge amount, and the expansion valve 23 is controlled such that the opening degree of at least one of the first expansion valve 231 and the second expansion valve 232 is smaller than the reference opening degree. Hereinafter, the case in which the compressor 21 and the expansion valve 23 are controlled such that the refrigerant R is stored in the receiver 20 is referred to as a "storage mode". In the storage mode, a part of the refrigerant R from the condenser 22 flows into the first expansion valve 231 and the second expansion valve 232, and a remaining part of the refrigerant R flows into the first receiver 201 via the first branch flow path L31 and is stored in the first receiver 201, and flows into the second receiver 202 via the second branch flow path L32 and is stored in the second receiver 202.

In the state in which the refrigerant R is stored in the receiver 20 in advance, when the opening degree of at least one of the first expansion valve 231 and the second expansion valve 232 increases, the refrigerant R stored in the first receiver 201 and the second receiver 202 is supplied to the first expansion valve 231 and the second expansion valve 232 in addition to the refrigerant R from the condenser 22. Specifically, the refrigerant R stored in the first receiver 201 is supplied to the first expansion valve 231 via the first merging flow path L41, and the refrigerant R stored in the second receiver 202 is supplied to the second expansion valve 232 via the second merging flow path L42.

As described above, the first receiver 201 is disposed in the vicinity of the first expansion valve 231. Therefore, when the opening degree of the first expansion valve 231 increases, the refrigerant R stored in the first receiver 201 is supplied to the first expansion valve 231 in a second required time shorter than the first required time. As a result, the insufficiency of the refrigerant R in the first expansion valve 231 can be prevented. Similarly, since the second receiver 202 is also disposed in the vicinity of the second expansion valve 232, when the opening degree of the second expansion valve 232 increases, the refrigerant R stored in the second receiver 202 is supplied to the second expansion valve 232 in a third required time shorter than the first required time. As a result, the insufficiency of the refrigerant R in the second expansion valve 232 can be prevented. The second required time and the third required time may be the same time or slightly different times. In the present specification, the vicinity of the expansion valve 23 refers to positions of the receiver 20 and the merging flow path L4 where the second required time and the third required time are shorter than the first required time. For example, the vicinity of the expansion valve 23 is the position (a region close to the expansion valve 23) of the receiver 20 where the second required time and the third required time are shorter than the first required time.

### [Operation and Effects of Embodiment]

As described above, according to the present embodiment, since the branch flow path L3, the merging flow path L4, and the receiver 20 are provided inside the manifold 10, the cooling module 100 can be made compact. When the cooling module 100 is used in a heat pump system, the receiver 20 can store the refrigerant R. Accordingly, for example, when a cooling switch is turned on during the cooling of the secondary battery 11, it is unnecessary to increase the output of the compressor 21 as usual, and the cooling can be quickly operated using the refrigerant R stored in the receiver 20. Thus, the compact cooling module 100 capable of coping with a rapid change in output of a cooling function (particularly, a rapid increase in the output of the cooling function) is obtained.

According to the present embodiment, since the merging flow path L4 communicating with the receiver 20 is disposed in the vicinity of the expansion valve 23, the stored refrigerant R can flow into the expansion valve 23 at an appropriate timing. As a result, for example, when the opening degree of the expansion valve 23 increases and the amount (required amount) required for the expansion valve 23 to expand the refrigerant R increases, since the refrigerant R can be supplied from the receiver 20 to the expansion valve 23 in a shorter period than the refrigerant R supplied from the compressor 21 or the like, it is possible to prevent the insufficiency of the refrigerant R in the expansion valve 23.

According to the present embodiment, since the branch flow path L3 and the merging flow path L4 that communicate with the receiver 20 are connected to the refrigerant flow path L2 downstream of the condenser 22, the refrigerant R condensed by the condenser 22 can be stored in the receiver 20. Accordingly, for example, even when the opening degree of the expansion valve 23 increases and the amount of the refrigerant R required in the expansion valve 23 increases, it is possible to prevent the insufficiency of the refrigerant R in the expansion valve 23.

According to the present embodiment, since the receiver 20 is disposed in the dead space of the manifold 10 in the vicinity of the expansion valve 23, a space use efficiency of the manifold 10 can be improved, and the cooling module 100 can be made compact.

### [Other Embodiments]

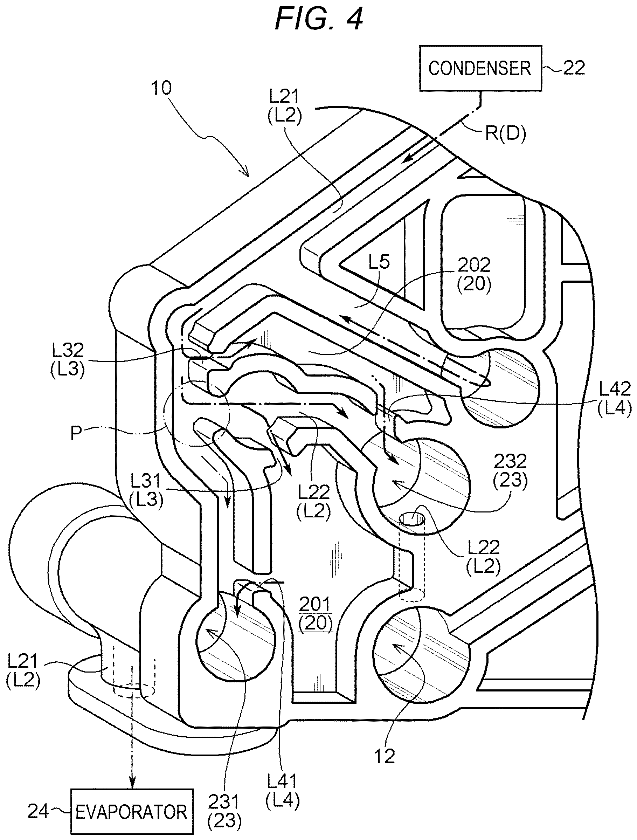

In addition to the above embodiment, this disclosure may be implemented as follows (those having the same functions as the embodiment are denoted by the same reference signs as in the embodiment).
(1) The amount of the refrigerant R used to adjust the temperature in the vehicle cabin, that is, the amount (required amount) required for the first expansion valve 231 connected to the evaporator 24 to expand the refrigerant R may be larger than the amount (required amount) required for the second expansion valve 232 connected to the chiller 12 to expand the refrigerant R. Therefore, for example, as illustrated in Fig. 4, a volume of the first receiver 201 may be larger than a volume of the second receiver 202. Accordingly, it is possible to prevent the insufficiency (the insufficiency of the refrigerant R used to adjust the temperature in the vehicle cabin) of the refrigerant R in the first expansion valve 231.
(2) In the present embodiment, the refrigerant R stored in the first receiver 201 is supplied to the first expansion valve 231, and the refrigerant R stored in the second receiver 202 is supplied to the second expansion valve 232. Alternatively, the refrigerant R stored in the first receiver 201 may be supplied to the second expansion valve 232, and the refrigerant R stored in the second receiver 202 may be supplied to the first expansion valve 231. A part of the refrigerant R stored in the first receiver 201 may be supplied to the first expansion valve 231, and a remaining part of the refrigerant R may be supplied to the second expansion valve 232. The same also applies to the refrigerant R stored in the second receiver 202.
(3) In the present embodiment, a case has been described in which two receivers 20 are provided, but the number of receivers 20 is not particularly limited, and may be, for example, one or three or more. When one receiver 20 is provided, the refrigerant R stored in the receiver 20 is supplied to the first expansion valve 231 and the second expansion valve 232. The number of branch flow paths L3 and the number of merging flow paths L4 are also changed according to the number of receivers 20.
(4) In the present embodiment, positions where the auxiliary devices such as the chiller 12 and the condenser 22 described with reference to Fig. 2 are disposed are appropriately changed. In this case, the positions of the receiver 20, the branch flow path L3, and the merging flow path L4 that are disposed inside the manifold 10 may also be appropriately changed according to the positions where the auxiliary devices are disposed.
(5) In the present embodiment, the case has been described in which the dead space is the region on the back side (inner side) of the region in which the auxiliary devices are disposed inside the manifold 10. Alternatively, the dead space may not be the region on the back side (inner side) of the region in which the auxiliary devices are disposed. The dead space may not be formed between the first refrigerant flow path L21 and the external connection flow path L5.
(6) In the present embodiment, the chiller 12, the condenser 22, and the expansion valve 23 are described as examples of the auxiliary devices attached to the manifold 10, and the auxiliary devices attached to the manifold 10 can be appropriately changed. The cooling module 100 includes the manifold 10 and the auxiliary devices attached to the manifold 10, and the cooling system 200 includes the cooling module 100 and devices other than the auxiliary devices attached to the manifold 10 among the auxiliary devices provided in the cooling fluid circuit 1 and the refrigerant circuit 2.
(7) In the present embodiment, the refrigerant R is described as an example of the fluid, but the fluid is not limited to the refrigerant R.

In the above embodiment, the following configuration is considered.
(1) The cooling module 100 according to this disclosure includes the manifold 10 in which the refrigerant flow path L2 (flow path) that allows the refrigerant R (fluid) to flow therethrough is formed. The manifold 10 includes, inside the manifold 10, the branch flow path L3 branching from the refrigerant flow path L2 (flow path), the merging flow path L4 merging with the refrigerant flow path L2 (flow path) downstream of the branch flow path L3 in the flow direction D of the refrigerant R (fluid), and the receiver 20 (storage unit) that communicates with the branch flow path L3 and the merging flow path L4, stores the refrigerant R (fluid) flowing through the branch flow path L3, and allows the stored refrigerant R (fluid) to flow from the merging flow path L4 to the refrigerant flow path L2 (flow path).
   According to this configuration, since the branch flow path L3, the merging flow path L4, and the receiver 20 (storage unit) are provided inside the manifold 10, the cooling module 100 can be made compact. In particular, when the cooling module 100 is used in the heat pump system, the receiver 20 (storage unit) can store the liquid refrigerant R. Accordingly, for example, when the cooling switch is turned on during the cooling of the secondary battery, it is unnecessary to increase the output of the compressor as usual, and the cooling can be quickly operated using the liquid refrigerant R stored in the receiver 20 (storage unit). Thus, the compact cooling module 100 capable of coping with a rapid change in the output of the cooling function is obtained.
(2) The cooling module 100 according to (1) further includes the condenser 22 and the expansion valve 23 that are attached to the manifold 10 and connected to the refrigerant flow path L2 (flow path). The merging flow path L4 may be connected to the refrigerant flow path L2 (flow path) on a side close to the expansion valve 23 in the refrigerant flow path L2 (flow path) between the condenser 22 and the expansion valve 23, and the branch flow path L3 and the merging flow path L4 may be connected to the refrigerant flow path L2 (flow path) downstream of the condenser 22.
   According to this configuration, since the merging flow path L4 communicating with the receiver 20 (storage unit) is disposed in the vicinity of the expansion valve 23, the stored refrigerant R (fluid) can flow into the expansion valve 23 at an appropriate timing. Specifically, the merging flow path L4 is connected to the refrigerant flow path L2 (flow path) on the side close to the expansion valve 23 in the refrigerant flow path L2 (flow path) between the condenser 22 and the expansion valve 23, and the branch flow path L3 and the merging flow path L4 are connected to the refrigerant flow path L2 (flow path) downstream of the condenser 22. Therefore, for example, when the opening degree of the expansion valve 23 increases and the amount of the liquid refrigerant R required in the expansion valve 23 increases, since the liquid refrigerant R can be supplied from the receiver 20 (storage unit) to the expansion valve 23 in a shorter period than the refrigerant R supplied from the compressor or the like, it is possible to prevent the insufficiency of the refrigerant R (fluid) in the expansion valve 23.
(3) In the cooling module 100 according to (2), the receiver 20 (storage unit) may be disposed in the dead space of the manifold 10 in the vicinity of the expansion valve 23.
   According to this configuration, since the receiver 20 (storage unit) is disposed in the dead space of the manifold 10 in the vicinity of the expansion valve 23, the space use efficiency of the manifold 10 can be improved, and the cooling module 100 can be made compact.
(4) In the cooling module 100 according to (3), the dead space may be formed between the first refrigerant flow path L21 (first flow path), in which the condenser 22 is disposed on an upstream side of the refrigerant flow path L2 (flow path) and the expansion valve 23 is disposed on a downstream side of the refrigerant flow path L2 (flow path), and the external connection flow path L5, into which the refrigerant R (fluid) flows from the external flow path provided outside the manifold 10 and is allowed to merge with the refrigerant R (fluid) in the first refrigerant flow path L21 (first flow path).
   According to this configuration, since the receiver 20 (storage unit) is disposed in the dead space between the refrigerant flow path L2 (flow path) and the external connection flow path L5, the space use efficiency of the manifold 10 can be improved, and the cooling module 100 can be made compact.
(5) In the cooling module 100 according to (3), the dead space may be the region on the back side of the region in which the auxiliary devices including the condenser 22 are disposed inside the manifold 10.
   According to this configuration, since the receiver 20 (storage unit) is disposed in the dead space of the manifold 10 (on the inner side of the projection image of the auxiliary devices) on the back side of the auxiliary devices, the space use efficiency of the manifold 10 can be improved, and the cooling module 100 can be made compact.
(6) The cooling module 100 according to any one of (2) to (5) further includes the evaporator 24 and the chiller 12 that are connected to the refrigerant flow path L2 (flow path). The expansion valve 23 includes the first expansion valve 231 and the second expansion valve 232. The refrigerant flow path L2 (flow path) includes the first refrigerant flow path L21 (first flow path) connected to the first expansion valve 231 and the second refrigerant flow path L22 (second flow path) connected to the second expansion valve 232. The merging flow path L4 includes the first merging flow path L41 and the second merging flow path L42. The receiver 20 (storage unit) includes the first receiver 201 (first storage unit) and the second receiver 202 (second storage unit). The first expansion valve 231 communicates with the first receiver 201 (first storage unit) via the first merging flow path L41 connected to the first refrigerant flow path L21 (first flow path) upstream of the first expansion valve 231, and is connected to the evaporator 24 via the first refrigerant flow channel L21 (first flow path) connected downstream of the first expansion valve 231. The second expansion valve 232 communicates with the second receiver 202 (second storage unit) via the second merging flow path L42 connected to the second refrigerant flow path L22 (second flow path) upstream of the second expansion valve 232, and is connected to the chiller 12 via the second refrigerant flow path L22 (second flow path) connected downstream of the second expansion valve 232. The volume of the first receiver 201 (first storage unit) may be larger than the volume of the second receiver 202 (second storage unit).

According to this configuration, the volume of the first receiver 201 (first storage unit) communicating with the first expansion valve 231, which is connected to the evaporator 24, via the first merging flow path L41 is larger than the volume of the second receiver 202 (second storage unit) communicating with the second expansion valve 232, which is connected to the chiller 12, via the second merging flow path L42. For example, when the cooling switch is turned on during the cooling of the secondary battery, the amount (required amount) required for the first expansion valve 231 connected to the evaporator 24 to expand the refrigerant R (fluid) may be larger than the amount (required amount) required for the second expansion valve 232 connected to the chiller 12 to expand the refrigerant R (fluid). Therefore, with such a configuration, it is possible to prevent the insufficiency of the refrigerant R (fluid) in the first expansion valve 231 by making the volume of the first receiver 201 (first storage unit) larger than the volume of the second receiver 202 (second storage unit).

### Industrial Applicability

This disclosure can be used for a cooling module.

### Reference Signs List

10: manifold
12: chiller
20: receiver (storage unit)
22: condenser
23: expansion valve
24: evaporator
100: cooling module
201: first receiver (first storage unit)
202: second receiver (second storage unit)
231: first expansion valve
232: second expansion valve
D: flow direction
L2: refrigerant flow path (flow path)
L21: first refrigerant flow path (first flow path)
L22: second refrigerant flow path (second flow path)
L3: branch flow path
L4: merging flow path
L41: first merging flow path
L42: second merging flow path
L5: external connection flow path
R: refrigerant (fluid)

## Claims

1. A cooling module comprising:
a manifold in which a flow path configured to allow a fluid to flow therethrough is formed, wherein
the manifold includes, inside the manifold,
a branch flow path branching from the flow path,
a merging flow path merging with the flow path downstream of the branch flow path in a flow direction of the fluid, and
a storage unit communicating with the branch flow path and the merging flow path and configured to store the fluid flowing through the branch flow path and allow the stored fluid to flow from the merging flow path to the flow path.

2. The cooling module according to claim 1, further comprising:
a condenser and an expansion valve that are attached to the manifold and connected to the flow path, wherein
the merging flow path is connected to the flow path on a side close to the expansion valve in the flow path between the condenser and the expansion valve, and
the branch flow path and the merging flow path are connected to the flow path downstream of the condenser.

3. The cooling module according to claim 2, wherein
the storage unit is disposed in a dead space of the manifold in a vicinity of the expansion valve.

4. The cooling module according to claim 3, wherein
the dead space is formed between a first flow path, in which the condenser is disposed on an upstream side of the flow path and the expansion valve is disposed on a downstream side of the flow path, and an external connection flow path, into which the fluid flows from an external flow path provided outside the manifold and is allowed to merge with the fluid in the first flow path.

5. The cooling module according to claim 3, wherein
the dead space is a region on a back side of a region in which an auxiliary device including the condenser is disposed inside the manifold.

6. The cooling module according to claim 2, further comprising:
an evaporator and a chiller that are connected to the flow path, wherein
the expansion valve includes a first expansion valve and a second expansion valve,
the flow path includes a first flow path connected to the first expansion valve and a second flow path connected to the second expansion valve,
the merging flow path includes a first merging flow path and a second merging flow path,
the storage unit includes a first storage unit and a second storage unit,
the first expansion valve communicates with the first storage unit via the first merging flow path connected to the first flow path upstream of the first expansion valve, and is connected to the evaporator via the first flow path connected downstream of the first expansion valve,
the second expansion valve communicates with the second storage unit via the second merging flow path connected to the second flow path upstream of the second expansion valve, and is connected to the chiller via the second flow path connected downstream of the second expansion valve, and
a volume of the first storage unit is larger than a volume of the second storage unit.
